# EUROPEAN PATENT APPLICATION

(11) **EP 1 930 365 A1**
(43) Date of publication of application: **11.06.2008**
(21) Application number: 07023102.2
(22) Date of filing: 29.11.2007
(51) Int. Cl.: C08J 9/00, C08J 9/35

(54) **A method for producing a starting material for a foamed moulded product, as well as the foamed moulded product**

(30) Priority: 07.12.2006 NL 1033014
(71) Applicant: SYNBRA TECHNOLOGY B.V., 4871 NM Etten-Leur (NL)
(72) Inventor: Noordegraaf, Jan, 6602 ZX Wijchen (NL); Britton, Robin Nicholas, 4885 AE Achtmaal (NL); Kuijstermans, Franciscus Petrus Antonius, 4714 RK Sprundel (NL)
(74) Representative: Blokland, Arie

(57) **Abstract**

The present invention relates to a method for producing a starting material from which a foamed moulded product can be formed, which starting material is based on particulate expandable polystyrene (EPS). The present invention further relates to a foamed moulded product based on particulate expandable polystyrene (EPS), which foamed mould product has a fine cell structure and a low density.

## Description

The present invention relates to a method for producing a starting material from which a foamed moulded product can be formed, which starting material is based on particulate expandable polystyrene (EPS). The present invention further relates to a foamed moulded product based on particulate expandable polystyrene (EPS), which foamed mould product has a fine cell structure and a low density.

From U.S. Pat. No. 4,307,134 a process for producing beads based on styrene polymer is known, which polymer beads are provided with a coating, said process comprising the steps of forming an aqueous suspension of beads based on styrene polymer in the presence of a suspension agent, preparing an emulsion containing a plasticized coating composition mainly consisting of styrenic monomer and a small amount of elastomer, whereupon the emulsion is added to the suspension and a coating is formed on the styrene polymer beads by polymerisation. The beads thus formed are subsequently impregnated with a blowing agent, after which the foamed moulded product can be obtained. The EPS granulate is generally used as a raw material in the packaging and construction industries.

From German Offenlegungsschrift No. 197 10 442 there is known a method for preparing expandable styrene polymer by mechanically mixing polystyrene with block copolymers in the melt, in particular in an extruder, and impregnating with a blowing agent. The blowing agent is preferably impregnated into a granulated polymer mixture in an aqueous suspension in a separate step.

From European patent application No. 0 849 309 there is known a method of producing so-called open-cell foams, wherein a mixture of polystyrene, in which an aliphatic hydrocarbon is incorporated, and a nucleating agent is fed to an extruder, and an expanded plate sheet is obtained after extrusion of the mixture. The mixture to be extruded comprises 10-20 per cent shock-resistant polystyrene, in particular a dispersion of polybutadiene in polystyrene.

U.S. Pat. No. 2005/0.124.709 relates to a low-density, open-cell thermoplastic foam comprising a basic resin, for example polystyrene, a surfactant and a plasticizer, for example polyethylene.

Experience shows that when EPS granulate is used in the packaging industry, for example as a foam material which surrounds delicate equipment, for example televisions, LCD displays, plasma displays, printers and the like, the packaging material made from EPS granulate may undesirably exhibit cracks after the product has fallen a number of times. The shock-absorbing properties of packaging material that exhibits such cracks strongly deteriorate, so that there is a risk that the product to be protected will sustain damage yet, which is undesirable.

Another drawback of the aforesaid packaging materials based on EPS granulate is that a blowing agent, in particular pentane, is used in the production process, which blowing agent exhibits a poor dissolution behaviour in the polymer matrix. Because of the volatility of the blowing agents that is used it is necessary to cool the raw material during transport in order to thus prevent premature loss of blowing agent. In practice this means that the intermediate product is transported over large distances in cooled containers all over the world, and that cooled spaces must be available at the location where the further processing of the semi-finished product takes place in order to minimise the loss of blowing agent.

Thus it is an object of the present invention to provide a method for producing a starting material for a foamed moulded product, in which the risk of the moulded product exhibiting cracks after being repeatedly subjected to mechanical loads is minimised.

Another object of the present invention is to provide a method for producing a starting material for a foamed moulded product, in which an optimum mixing of particulate EPS and the other components takes place.

Yet another object of the present invention is to provide a method for producing a starting material for a foamed moulded product by which a product is obtained which can be stored at ambient temperatures for a prolonged period of time without any loss of blowing agent.

The method as referred to in the introduction is characterised in that the method comprising the following steps:
i) feeding particulate EPS, blowing agent and a poly(styrene-butadiene-styrene-) (SBS) containing starting material to an extruder,
ii) extruding the mixture supplied in step i), and
iii) reducing the material obtained in step ii) to particles.

One or more of the above objects are accomplished by using such a method. A starting material containing poly(styrene-butadiene-stryrene) (SBS) is, for example, high impact polystyrene (HIPS). Other starting materials containing poly(styrene-butadiene-stryrene) (SBS) are low impact polystyrene (LIPS), medium impact polystyrene (MIPS) and coplymers which covers styrene-butadiene-styrene (SBS), styrene-isoprene-styrene (SIS), styrene-ethylene-butadiene-styrene (SEBS), styrene-butadiene (SB) copolymers and its combinations, like EPS/HIPS/SBS for example. The present inventors have in particular found that the retention of blowing agent, such as pentane, is high, which is advantageous. Furthermore it has been found that the present method results in a foam having a closed cell structure, so that advantageous resilience properties are obtained. It is in particular desirable to use a double screw extruder for carrying out step i), as the present inventors assume that the starting materials fed to the extruder are optimally mixed in this way. Although it is indicated in step i) that only three components are fed to the extruder, it is clear that this does not exclude the presence of usual auxiliary substances, such as fire retardants, insulation value-increasing agents, liquefiers, release agents, anti-coagulants and the like, which auxiliary substances may or may not be mixed with the other starting materials. As a result of the special selection of the extrusion process and the starting materials, products having closed cell structures are obtained, making it possible to store the aforesaid products for a prolonged period of time at ambient temperatures without any loss of blowing agent.

After step iii) has been carried out, it is preferable if the further processing of the particles thus reduced comprises a pre-foaming treatment, wherein an amount of steam is passed through a layer of the EPS beads thus obtained in step iii) in an expansion vessel, causing the blowing agent, preferably pentane, present in the EPS beads to evaporate, after which the foaming of the beads takes place. After a storage period of about 4-48 hours, also called "setting", the thus pre-foamed bead is introduced into a mould, in which the beads are further expanded under the influence of steam. The mould that is used is provided with small apertures, which allow the remaining blowing agent to escape during said expansion, while the beads fuse together into the desired shape. In principle the dimension of the moulded product thus foamed is not bound by limitations, and it is possible to obtain blocks for the construction and engineering industries as well as meat trays, fish boxes or packaging units. It is in particular desirable to refrain from adding polyolefins during the extrusion process, as said compounds adversely affect the processing of the particulate materials.

The inventors have carried out a number of experiments to measure the crack resistance of the thus foamed moulded product, which is of the closed cell type, and surprisingly they have found that if the weight percentage of butadiene, calculated on the basis of the weight of the foamed moulded product, is at least 1.5 wt.%, in particular at least 1.6 wt.%, more in particular at least 2.0 wt.%, excellent properties are obtained as regards the crack resistance. The percentage of butadiene is measured by means of NMR.

The present invention will be explained hereinafter by means of a number of examples, in which connection it should be noted that the present invention is by no means limited to such special examples. The measuring results are summarized in the appended table.

### Example 1

A commercially available material, viz. BASF 486M high impact polystyrene (HIPS), was added in an amount of 10 wt.% to EPS beads, after which an extrusion operation was carried out in the presence of pentane. Thus, the starting materials HIPS and EPS beads were first mixed into the melt, after which pentane was injected into the extruder before reduction took place. BASF 486M contains about 5.5 % butadiene. The material thus obtained was reduced and formed into a foamed moulded product having a density of 20 kg/m³. The amount of butadiene in the foamed moulded product was 0.5 %, the amount of pentane was 5 %. The crack resistance was tested, using a hammer falling from a height from 1 m, which hammer had a weight of 2 kg. From Example 1 it follows that the foamed moulded product already exhibited several cracks already after one drop. After the above drop test had been carried out three times, even more cracks were observed in the foamed moulded product.

### Example 2

The same operations as in Example 1 were carried out, except that the amount of BASF 486M was 20% and the amount of butadiene was 1.1 %. The crack resistance was insufficient in this case as well.

### Example 3

The same operations as in Example 1 were carried out, except that BASF 486M was added in an amount of 30%, whilst the amount of butadiene was 1.6 %. The foamed moulded product exhibited a number of cracks immediately after the drop test.

### Example 4

The same operations as in Example 1 were carried out, except that BASF 486M was added in an amount of 40%, whilst the amount of butadiene was 2.2 %. The drop test as described in Example 1 did not result in cracks being formed in the foamed moulded product, not even after said drop test was repeated a number of times.

### Example 5

The same operations as in Example 1 were carried out, except that instead of BASF 486M, Asaflex transparent SBS copolymer was added in an amount of 10%. The amount of butadiene in Asaflex is about 27 %. The weight percentage of butadiene in the foamed moulded product was 2.7 %, and the foamed moulded product did not exhibit any cracks after the drop test, not even after the drop test was repeated a number of times.

### Example 6

The same operations as in Example 5 were carried out, except that a weight percentage of 20 % was used, whilst the weight percentage of butadiene in the foamed moulded product was 5.4 %. The crack resistance appeared to be good, even after the drop test was repeated a number of times.

### Example 7

A commercially available EPS material, viz. Sunpor (trademark) was extruded in the presence of a blowing agent and further processed into a foamed moulded product comprising butadiene in an amount of 0.7 wt.%. The crack resistance was insufficient, with cracks being observed in the foamed moulded product already after the first drop test.

### Example 8

The commercially available product Arcel, obtained by using so-called seed polymerisation, wherein polyethylene granules are provided with a polystyrene coating formed by polymerisation, was used as a comparative foam material. The amount of butadiene was 0 wt.%. Said material is known for its good crack resistance properties in the industry, which is reflected in the drop test results.

### Example 9

A standard type of EPS beads, obtained by polymerisation, was used for producing a foamed moulded product. The amount of butadiene in the foamed moulded product was 0 wt.%. The drop test showed that the foamed moulded product was very delicate and that cracking occurred already after one drop.

From the table it follows that in the case of the foamed moulded products obtained by extrusion (Examples 1-6), an amount of butadiene of at least 1.5 wt.%, especially at least 1,6 wt.% results in an improved crack resistance. Examples 7-9 are examples which only function as references, the materials in question were not obtained by means of the present extrusion method.

**Table**

| example | starting material | % | density at test (kg/m³) | % butadiene in moulded product | % pentane in bead | results at drop test | elasticity (relative) | drop test 3x |
|---|---|---|---|---|---|---|---|---|
| 1 | BASF 486M (impact 12) | 10 | 20 | 0,5 | 5.00 % | several cracks | - | - |
| 2 | BASF 486M (impact 12 | 20 | 19 | 1,1 | 5.00 % | several cracks | 0/- | - |
| 3 | BASF 486M (impact 12 | 30 | 21 | 1,6 | 5.00 % | a few cracks | + | - |
| 4 | BASF 486M (impact 12 | 40 | 20 | 2,2 | 5.00 % | deforms, no cracks | ++ | - |
| 5 | Asaflex transparent SBS copolymer | 10 | 20 | 2,7 | 5.00 % | deforms, no cracks | + | + |
| 6 | Asaflex transparent SBS copolymer | 20 | 19 | 5,4 | 5.00 % | deforms, no cracks | + + | + + |
| | | | | | | | | |
| 7 | Sunpor TM | reference | 20 | 0,7 | 4.8 % | several cracks | 0/- | - |
| 8 | Arcel | reference | 21 | 0 | 12.00 % | deforms, no cracks | + + | + + |
| 9 | EPS standard R type | reference | 19 | 0 | 5.80 % | several cracks | -- | ---- |

## Claims

1. A method for producing a starting material from which a foamed moulded product can be formed, which starting material is based on particulate expandable polystyrene (EPS), **characterised in that** the method comprises the following steps:
i) feeding particulate EPS, blowing agent and a poly(styrene-butadiene-styrene-) (SBS) containing starting material to an extruder,
ii) extruding the mixture supplied in step i), and
iii) reducing the material obtained in step ii) to particles.

2. A method according to claim 1, **characterised in that** step i) is carried out in a double screw extruder.

3. A method according to either one or both of the claims 1-2, **characterised in that** the amount of SBS-containing starting material is selected so that the weight percentage of butadiene, calculated on the basis of the weight of a foamed moulded product composed of particles obtained after step iii), is at least 1.5 wt.%.

4. A method according to claim 3, **characterised in that** the amount of SBS-containing starting material is selected so that the weight percentage of butadiene, calculated on the basis of the weight of a foamed moulded product composed of particles obtained after step iii), is at least 2 wt.%.

5. A method according to any one or more of the preceding claims, **characterised in that** the method further comprises the steps of:
iv) pre-foaming the particles obtained after step iii),
v) allowing the pre-foamed particles obtained after step iv) to set, and
vi) converting the material obtained after step v) into foamed moulded products.

6. A method according to claim 5, **characterised in that** step iv) is carried out by means of steam.

7. A method according to claim 5, **characterised in that** step v) is carried out at room temperature.

8. A foamed moulded product based on particulate expandable polystyrene (EPS), **characterised in that** moulded product is of the closed cell type, and that the weight percentage of butadiene, calculated on the basis of the weight of the foamed moulded product, is at least 1.5 wt.%.

9. A foamed moulded product according to claim 8, **characterised in that** the weight percentage of butadiene, calculated on the basis of the weight of the foamed moulded product, is at least 2 wt. %.
